(19) Europäisches Patentamt
European Patent Office
Office européen des brevets

(11) EP 3 950 758 A1

(12) **EUROPEAN PATENT APPLICATION**
published in accordance with Art. 153(4) EPC

(43) Date of publication:
**09.02.2022 Bulletin 2022/06**

(21) Application number: **20784655.1**

(22) Date of filing: **26.03.2020**

(51) International Patent Classification (IPC):
***C08G 18/80*** *(2006.01)* ***C08G 18/10*** *(2006.01)*
***C08G 18/48*** *(2006.01)* ***D06N 3/14*** *(2006.01)*

(52) Cooperative Patent Classification (CPC):
**C08G 18/10; C08G 18/48; C08G 18/80; D06N 3/14**

(86) International application number:
**PCT/JP2020/013517**

(87) International publication number:
**WO 2020/203602 (08.10.2020 Gazette 2020/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2019 JP 2019068476**

(71) Applicant: **Mitsui Chemicals, Inc.**
**Tokyo 105-7122 (JP)**

(72) Inventors:
- **FUKUDA, Kazuyuki**
**Sodegaura-shi, Chiba 299-0265 (JP)**
- **KOBAYASHI, Takeshi**
**Sodegaura-shi, Chiba 299-0265 (JP)**
- **SHIBATA, Tatsuya**
**Sodegaura-shi, Chiba 299-0265 (JP)**
- **YAMASHITA, Tatsuya**
**Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

(54) **CROSSLINKING AGENT FOR FIBERS OR LEATHER**

(57) A cross-linking agent for a fiber or leather includes a blocked isocyanate in which an insocyanate group of a hydrophilic group-containing polyisocyanate being reaction product of a polyisocyante and a hydrophilic group-containing active hydrogen compound is blocked by a blocking agent. The blocking agent contains a secondary amine compound in which two carbon atoms are directly bonded to a nitrogen atom of a secondary amine, and at least one of the two hydrocarbon atoms is a tertiary carbon atom.

EP 3 950 758 A1

**Description**

TECHNICAL FIELD

The present invention relates to a cross-linking agent for a fiber or leather.

BACKGROUND ART

Conventionally, textile printing in which an ink is prepared by mixing a pigment, a water dispersion resin, and a cross-linking agent, and after printing the ink on a fabric, the ink is cured to form an image on the fabric has been known.

As a cross-linking agent used in such an ink for textile printing, for example, a water dispersion polyisocyanate cross-linking agent has been proposed in which an isocyanate group of an isocyanate prepolymer which is a reaction product of a biuret product of a hexamethylene diisocyanate and a polyethylene glycol monomethyl ether is blocked by a 3,5-dimethylpyrazole as a blocking agent (ref: for example, Patent Document 1 (Example 7) below).

Citation List

Patent Document

Patent Document 1: Japanese Unexamined Patent Publication No. 2012-72381

SUMMARY OF THE INVENTION

PROBLEM TO BE SOLVED BY THE INVENTION

Although excellent friction fastness is required for a cured product of an ink for textile printing, in the water dispersion polyisocyanate cross-linking agent described in Patent Document 1, it is not possible to impart sufficient friction fastness to a cured product of an ink for textile printing. In particular, in the water dispersion polyisocyanate cross-linking agent described in Patent Document 1, the friction fastness in low-temperature curing which has been required in recent years is insufficient.

The present invention provides a cross-linking agent for a fiber or leather capable of imparting excellent friction fastness to a cured product of an ink for textile printing.

MEANS FOR SOLVING THE PROBLEM

The present invention [1] includes a cross-linking agent for a fiber or leather including a blocked isocyanate in which an insocyanate group of a hydrophilic group-containing polyisocyanate being reaction product of a polyisocyante and a hydrophilic group-containing active hydrogen compound is blocked by a blocking agent, wherein the blocking agent contains a secondary amine compound; in the secondary amine compound, two carbon atoms are directly bonded to a nitrogen atom of a secondary amino group; and at least one of the two hydrocarbon atoms is a tertiary carbon atom.

The present invention [2] includes the cross-linking agent for a fiber or leather described in the above-described [1], wherein an equivalent ratio of a secondary amino group of the blocking agent to an isocyanate group of the hydrophilic group-containing polyisocyanate is 0.5 or more and 1.5 or less.

The present invention [3] includes the cross-linking agent for a fiber or leather described in the above-described [1] or [2], wherein the hydrophilic group-containing active hydrogen compound contains a polyoxyethylene group-containing active hydrogen compound.

The present invention [4] includes the cross-linking agent for a fiber or leather described in the above-described [3], wherein the oxyethylene group content in the hydrophilic group-containing polyisocyanate is 2.5% by mass or more and 35% by mass or less.

The present invention [5] includes the cross-linking agent for a fiber or leather described in any one of the above-described [1] to [4], wherein in the secondary amine compound, of two carbon atoms bonded to a nitrogen atom of a secondary amino group, one carbon atom is a tertiary carbon atom and the other carbon atom is a tertiary carbon atom or a secondary carbon atom.

The present invention [6] includes the cross-linking agent for a fiber or leather described in the above-described [5], wherein the other carbon atom is a tertiary carbon atom.

EFFECT OF THE INVENTION

In the cross-linking agent for a fiber or leather of the present invention, it is possible to impart excellent friction fastness to a cured product of an ink for textile printing.

DESCRIPTION OF EMBODIMENTS

A cross-linking agent for a fiber or leather of the present invention is a cross-linking agent (cross-linking agent for textile printing) used for textile printing on a fiber or leather. In the following, for convenience, a cross-linking agent for a fiber or leather is simply referred to as a cross-linking agent. The cross-linking agent includes at least a blocked isocyanate. In the blocked isocyanate, an isocyanate group of a hydrophilic group-containing polyisocyanate is blocked by a blocking agent.

(1) Hydrophilic Group-Containing Polyisocyanate

The hydrophilic group-containing polyisocyanate is a reaction product of a polyisocyanate and a hydrophilic group-containing active hydrogen compound, and has two or more free isocyanate groups.

(1-1) Polyisocyanate

Examples of the polyisocyanate include a polyisocyanate monomer and a polyisocyanate derivative.

Examples of the polyisocyanate monomer include an aliphatic polyisocyanate monomer, an aromatic polyisocyanate monomer, and an araliphatic polyisocyanate monomer.

Examples of the aliphatic polyisocyanate monomer include aliphatic diisocyanate monomers such as ethylene diisocyanate, trimethylene diisocyanate, 1,2-propylene diisocyanate, butylene diisocyanate (tetramethylene diisocyanate, 1,2-butylene diisocyanate, 2,3-butylene diisocyanate, 1,3-butylene diisocyanate), 1,5-pentamethylene diisocyanate (PDI), 1,6-hexamethylene diisocyanate (HDI), 2,4,4- or 2,2,4-trimethylhexamethylene diisocyanate, and 2,6-diisocyanate methyl caproate.

Further, the aliphatic polyisocyanate monomer includes an alicyclic polyisocyanate monomer. In addition, in the aliphatic polyisocyanate monomer, when the alicyclic polyisocyanate monomer and the above-described aliphatic polyisocyanate monomer are distinguished from each other, the above-described aliphatic polyisocyanate monomer is referred to as a chain aliphatic polyisocyanate monomer.

Examples of the alicyclic polyisocyanate monomer include alicyclic diisocyanate monomers such as 1,3-cyclopentane diisocyanate, 1,3-cyclopentene diisocyanate, cyclohexane diisocyanate (1,4-cyclohexane diisocyanate, 1,3-cyclohexane diisocyanate), 3-isocyanatomethyl-3,5,5-trimethylcyclohexyl isocyanate (isophorone diisocyanate) (IPDI), methylenebis(cyclohexyl isocyanate) (4,4'-, 2,4'-, or 2,2'-methylenebis(cyclohexyl isocyanate), and a trans-trans isomer, trans-cis isomer, and cis-cis isomer of these, or a mixture thereof) ($H_{12}$MDI), methylcyclohexane diisocyanate (methyl-2,4-cyclohexane diisocyanate, methyl-2,6-cyclohexane diisocyanate), norbornane diisocyanate (various isomers or a mixture thereof) (NBDI), and bis(isocyanatomethyl)cyclohexane (1,3- or 1,4-bis(isocyanatomethyl)cyclohexane or a mixture thereof) ($H_6$XDI).

Examples of the aromatic polyisocyanate monomer include tolylene diisocyanate (2,4- or 2,6-tolylene diisocyanate or a mixture thereof) (TDI), phenylene diisocyanate (m-, p-phenylene diisocyanate or a mixture thereof), 4,4'-diphenyl diisocyanate, 1,5-naphthalene diisocyanate (NDI), diphenylmethane diisocyanate (4,4'-, 2,4'-, or 2,2'-diphenylmethane diisocyanate or a mixture thereof) (MDI), 4,4'-toluidine diisocyanate (TODI), and 4,4'-diphenylether diisocyanate.

Examples of the araliphatic polyisocyanate monomer include araliphatic diisocyanate monomers such as xylylene diisocyanate (1,3- or 1,4-xylylene diisocyanate or a mixture thereof) (XDI), tetramethylxylylene diisocyanate (1,3- or 1,4-tetramethylxylylene diisocyanate or a mixture thereof) (TMXDI), and ω, ω'-diisocyanate-1,4-diethylbenzene.

The polyisocyanate derivative is derived from the above-described polyisocyanate monomer (specifically, an aliphatic polyisocyanate monomer, an aromatic polyisocyanate monomer, and an araliphatic polyisocyanate). Examples of the polyisocyanate derivative include multimers of the above-described polyisocyanate monomers, low molecular weight polyol derivatives, allophanate derivatives, biuret derivatives, urea derivatives, oxadiazinetrione derivatives, carbodiimide derivatives, and uretonimine derivatives.

Examples of the multimer of the polyisocyanate monomer include dimers, trimers, pentamers, and heptamers of the above-described polyisocyanate monomer (for example, urethodione derivatives, isocyanurate derivatives, and iminooxadiazinedione derivatives).

The low molecular weight polyol derivative of the polyisocyanate monomer is a reaction product of the above-described polyisocyanate monomer and a trihydric alcohol. Examples of the trihydric alcohol include glycerin and trimethylolpropane, and preferably, trimethylolpropane is used. Therefore, as the low molecular weight polyol derivative of the polyisocyanate monomer, preferably, a trimethylolpropane adduct is used.

The allophanate derivative of the polyisocyanate monomer is, for example, a reaction product obtained by reacting the above-described polyisocyanate monomer with a monohydric alcohol or a dihydric alcohol in the presence of a known allophanatization catalyst.

Examples of the monohydric alcohol include methanol, ethanol, propanol, butanol, dodecanol (lauryl alcohol), and octadecanol (stearyl alcohol).

Examples of the dihydric alcohol include ethylene glycol, propylene glycol, 1,3-propanediol, 1,4-butylene glycol, 1,3-butylene glycol, 1,2-butylene glycol, 1,5-pentanediol, 1,6-hexanediol, diethylene glycol, triethylene glycol, dipropylene glycol, 3-methyl-1,5-pentanediol, isosorbide, 1,3- or 1,4-cyclohexanedimethanol and a mixture thereof, 1,4-cyclohexanediol, hydrogenated bisphenol A, 1,4-dihydroxy-2-butene, 2,6-dimethyl-1-octene-3,8-diol, and bisphenol A.

The biuret derivative of the polyisocyanate monomer is, for example, a reaction product obtained by reacting the above-described polyisocyanate monomer with water or amines in the presence of a known biuret-formed catalyst.

The urea derivative of the polyisocyanate monomer is, for example, a reaction product of the above-described polyisocyanate monomer and a diamine.

The oxadiazinetrione derivative of the polyisocyanate monomer is, for example, a reaction product of the above-described polyisocyanate monomer and a carbon dioxide gas.

The carbodiimide derivative of the polyisocyanate monomer is, for example, a reaction product by a decarboxylation condensation reaction of the above-described polyisocyanate monomer.

The uretonimine derivative of the polyisocyanate monomer is, for example, a reaction product of the above-described carbodiimide derivative and the above-described polyisocyanate monomer.

A polyisocyanate derivative derived from an aliphatic polyisocyanate monomer is referred to as an aliphatic polyisocyanate derivative, a polyisocyanate derivative derived from an aromatic polyisocyanate monomer is referred to as an aromatic polyisocyanate derivative, and a polyisocyanate derivative derived from an araliphatic polyisocyanate monomer is referred to as an araliphatic polyisocyanate derivative, and they are distinguished from each other.

Further, the polyisocyanate can be also classified by a chemical structure. For example, the polyisocyanate can be classified into an aliphatic polyisocyanate, an aromatic polyisocyanate, and an araliphatic polyisocyanate. The aliphatic polyisocyanate includes the above-described aliphatic polyisocyanate monomer and the above-described aliphatic polyisocyanate derivative. The aromatic polyisocyanate includes the above-described aromatic polyisocyanate monomer and the above-described aromatic polyisocyanate derivative. The araliphatic polyisocyanate includes the above-described araliphatic polyisocyanate monomer and the above-described araliphatic polyisocyanate derivative.

These polyisocyanates may be used alone or in combination of two or more.

The polyisocyanate preferably includes an aliphatic polyisocyanate and/or an araliphatic polyisocyanate, more preferably includes an aliphatic polyisocyanate, and particularly preferably consists of an aliphatic polyisocyanate.

When the polyisocyanate includes an aliphatic polyisocyanate and/or an araliphatic polyisocyanate, it is possible to reliably improve a pot life of an ink for textile printing to be described later. In particular, when the polyisocyanate includes an aliphatic polyisocyanate, it is possible to improve the friction fastness of an ink cured product to be described later as compared with a case where the polyisocyanate does not include an aliphatic polyisocyanate.

The polyisocyanate preferably includes a polyisocyanate derivative, and more preferably includes a polyfunctional polyisocyanate derivative having three or more isocyanate groups. Examples of the polyfunctional polyisocyanate derivative include an isocyanurate derivative of a polyisocyanate monomer and a trimethylolpropane adduct of a polyisocyanate monomer.

In addition, of the polyfunctional polyisocyanate derivatives, preferably, an isocyanurate derivative of a polyisocyanate monomer is used, more preferably, an isocyanurate derivative of an aliphatic polyisocyanate monomer is used, particularly preferably, an isocyanurate derivative of a chain aliphatic polyisocyanate monomer (aliphatic polyisocyanate monomer excluding an alicyclic polyisocyanate monomer) is used, more particularly preferably, an isocyanurate derivative of HDI and/or an isocyanurate derivative of PDI are/is used.

When the polyisocyanate contains a polyisocyanate derivative, it is possible to stably impart excellent friction fastness to an ink cured product to be described later. In particular, when the polyisocyanate contains an isocyanurate derivative of a polyisocyanate monomer (isocyanurate derivative of a chain aliphatic polyisocyanate monomer), it is possible to reliably improve the pot life of the ink for textile printing to be described later as compared with a case where the polyisocyanate does not contain the isocyanurate derivative of the polyisocyanate monomer (isocyanurate derivative of the chain aliphatic polyisocyanate monomer).

In addition, an average functionality of the isocyanate group in the polyisocyanate is, for example, 2 or more, preferably 2.5 or more, and for example, 4 or less, preferably 3.5 or less.

Further, the isocyanate group content (NCO%) in the polyisocyanate is, for example, 2% by mass or more, preferably 5% by mass or more, further more preferably 15% by mass or more, and for example, 40% by mass or less, preferably 30% by mass or less.

(1-2) Hydrophilic Group-Containing Active Hydrogen Compound

The hydrophilic group-containing active hydrogen compound is, for example, a compound having a hydrophilic group and an active hydrogen group capable of reacting with an isocyanate group (for example, a hydroxyl group, an amino group, and the like) in combination.

Examples of the hydrophilic group include ionic groups such as an anionic group and a cationic group, and nonionic groups.

As the ionic group, preferably, an anionic group is used, and specifically, a carboxyl group, a sulfonyl group, and a phosphate group are used.

Examples of the carboxyl group-containing active hydrogen compound include dihydroxylcarboxylic acids such as 2,2-dimethylolacetic acid, 2,2-dimethylollactic acid, 2,2-dimethylolpropionic acid, 2,2-dimethylolbutanoic acid, 2,2-dimethylolbutyric acid, and 2,2-dimethylolvaleric acid, and diaminocarboxylic acids such as lysine and arginine.

Examples of the sulfonyl group-containing active hydrogen compound include N,N-bis(2-hydroxyethyl)-2-aminoethanesulfonic acid, 1,3-phenylenediamine-4,6-disulfonic acid, diaminobutanesulfonic acid, 3,6-diamino-2-toluenesulfonic acid, and 2,4-diamino-5-toluenesulfonic acid.

An example of the phosphate group-containing active hydrogen compound includes a 2,3-dihydroxypropylphenylphosphate.

An example of the nonionic group includes a polyoxyethylene group.

The polyoxyethylene group-containing active hydrogen compound has at least three continuous oxyethylene groups (ethylene oxide groups), and an active hydrogen group. Examples of the polyoxyethylene group-containing active hydrogen compound include a polyoxyethylene group-containing polyol, a polyoxyethylene group-containing polyamine, a one end-capped polyoxyethylene glycol, and a one end-capped polyoxyethylene diamine.

Examples of the polyoxyethylene group-containing polyol include polyoxyethylene glycol, polyoxyethylene triol, random and/or block copolymers of ethylene oxide and propylene oxide (for example, polyoxypropylene polyoxyethylene copolymer diol or triol, polyoxypropylene polyoxyethylene block polymer diol or triol, pluronic-type polyoxypropylene glycol or triol obtained by addition polymerization of an ethylene oxide at the end of the polyoxypropylene glycol, and the like).

Further, an example of the polyoxyethylene group-containing polyol includes a polyoxyethylene side chain-containing polyol having two or more hydroxyl groups at its molecular end and having a polyoxyethylene group in its side chain. The polyoxyethylene side chain-containing polyol can be, for example, prepared by first subjecting a diisocyanate monomer (for example, the above-described aliphatic diisocyanate monomer and the like) and a one end-capped polyoxyethylene glycol (described later) to a urethanization reaction to synthesize a polyoxyethylene chain-containing monoisocyanate, and next, subjecting a polyoxyethylene chain-containing monoisocyanate and a dialkanolamine (dialkanolamine of C1 to C20) to a ureanization reaction.

Further, an example of the polyoxyethylene side chain-containing polyol includes a polyoxyethylene side chain-containing polyol obtained by adding a one end-capped polyoxyethylene glycol (described later) to one hydroxyl group of a trihydric alcohol such as trimethylolpropane.

Examples of the polyoxyethylene group-containing polyamine include polyoxyalkylene ether diamines such as polyoxyethylene ether diamine.

An example of the one end-capped polyoxyethylene glycol includes an alkoxy polyoxyethylene glycol (poly(oxyethylene) alkyl ether) having one end capped with an alkyl group having 1 to 20 carbon atoms, and specifically, examples thereof include methoxy polyoxyethylene glycol (poly(oxyethylene) methyl ether) and ethoxy polyoxyethylene glycol (poly(oxyethylene) ethyl ether).

An example of the one end-capped polyoxyethylene diamine includes a polyoxyethylene diamine having one end capped with an alkoxy group having 1 to 20 carbon atoms.

A number average molecular weight of the polyoxyethylene group-containing active hydrogen compound is, for example, 200 or more, preferably 300 or more, and for example, 2000 or less, preferably 1500 or less. The number average molecular weight of the polyoxyethylene group-containing active hydrogen compound can be measured by gel permeation chromatography.

These hydrophilic group-containing active hydrogen compounds may be used alone or in combination of two or more.

The hydrophilic group-containing active hydrogen compound preferably includes a polyoxyethylene group-containing active hydrogen compound, more preferably includes a polyoxyethylene group-containing polyol and/or a one end-capped polyoxyethylene glycol, further more preferably includes a one end-capped polyoxyethylene glycol, particularly preferably includes an alkoxypolyoxyethylene glycol (poly(oxyethylene) alkyl ether), and most preferably includes a methoxypolyoxyethylene glycol.

(1-3) Preparation of Hydrophilic Group-Containing Polyisocyanate

Next, the preparation of the hydrophilic group-containing polyisocyanate is described.

The hydrophilic group-containing polyisocyanate is a reaction product of the above-described polyisocyanate and the above-described hydrophilic group-containing active hydrogen compound.

In order to prepare the hydrophilic group-containing polyisocyanate, the above-described polyisocyanate and the above-described hydrophilic group-containing active hydrogen compound are reacted at a ratio at which a free isocyanate group remains.

An equivalent ratio (active hydrogen group/ NCO) of an active hydrogen group of the hydrophilic group-containing active hydrogen compound to a free isocyanate group of the polyisocyanate is, for example, 0.01 or more, preferably 0.05 or more, and for example, 0.30 or less, preferably 0.20 or less.

A mixing ratio of the hydrophilic group-containing active hydrogen compound is, for example, 1.0 part by mass or more, preferably 2.0 parts by mass or more, further more preferably 10 parts by mass or more, and for example, 70 parts by mass or less, preferably 60 parts by mass or less, more preferably 50 parts by mass or less with respect to 100 parts by mass of the polyisocyanate.

Further, the reaction of the polyisocyanate with the hydrophilic group-containing active hydrogen compound is carried out, for example, in an atmosphere of an inert gas (for example, nitrogen gas, argon gas, and the like) in the presence of an organic solvent.

Examples of the organic solvent include ketones (for example, acetone, methyl ethyl ketone, methyl isobutyl ketone, cyclohexanone, and the like), nitriles (for example, acetonitrile and the like), alkyl esters (for example, methyl acetate, ethyl acetate, butyl acetate, isobutyl acetate, and the like), aliphatic hydrocarbons (for example, n-hexane, n-heptane, octane, and the like), alicyclic hydrocarbons (for example, cyclohexane, methylcyclohexane, and the like), aromatic hydrocarbons (for example, toluene, xylene, ethylbenzene, and the like), glycol ether esters (for example, methyl cellosolve acetate, ethyl cellosolve acetate, methyl carbitol acetate, ethyl carbitol acetate, ethylene glycol monoethyl ether acetate, propylene glycol monomethyl ether acetate, 3-methyl-3-methoxybutyl acetate, ethyl-3-ethoxypropionate, and the like), ethers (for example, diethyl ether, tetrahydrofuran, dioxane, 1,2-dimethoxyethane, diethylene glycol dimethyl ether, diethylene glycol diethyl ether, diethylene glycol ethyl methyl ether, dipropylene glycol dimethyl ether, dipropylene glycol diethyl ether, and the like), halogenated aliphatic hydrocarbons (for example, methyl chloride, methylene chloride, chloroform, carbon tetrachloride, methyl bromide, methylene iodide, dichloroethane, and the like), and polar aprotones (for example, N-methylpyrrolidone, dimethylformamide, N,N'-dimethylacetamide, dimethyl sulfoxide, hexamethylphosphonylamide, and the like).

These organic solvents may be used alone or in combination of two or more. The organic solvent preferably includes ethers, more preferably consists of ethers, and particularly preferably consists of diethylene glycol ethyl methyl ether.

An addition ratio of the organic solvent is, for example, 1 part by mass or more, preferably 10 parts by mass or more, and for example, 100 parts by mass or less, preferably 50 parts by mass or less with respect to 100 parts by mass of the polyisocyanate.

A reaction temperature is, for example, 50°C or more, preferably 70°C or more, and for example, 150°C or less, preferably 110°C or less. The reaction pressure is, for example, the atmospheric pressure. The reaction time is, for example, 0.5 hours or more, preferably 1 hour or more, and for example, 120 hours or less, preferably 72 hours or less.

The completion of the reaction can be, for example, judged by no change in an amount of isocyanate measured by a titration method.

The polyisocyanate and the hydrophilic group-containing active hydrogen compound can be also reacted under a solvent-free state.

Thus, the isocyanate group of the polyisocyanate and the active hydrogen group of the hydrophilic group-containing active hydrogen compound react with each other to prepare a hydrophilic group-containing polyisocyanate in which two or more free isocyanate groups remain.

An average functionality of the free isocyanate group in the hydrophilic group-containing polyisocyanate is, for example, 2 or more, preferably 2.2 or more, and for example, 4.0 or less, preferably 3.5 or less.

The isocyanate group concentration (in terms of solid content) in the hydrophilic group-containing polyisocyanate is, for example, 5% by mass or more, preferably 7% by mass or more, and for example, 30% by mass or less, preferably 25% by mass or less, further more preferably 20% by mass or less.

When the hydrophilic group-containing active hydrogen compound includes a polyoxyethylene group-containing active hydrogen compound, the oxyethylene group content (in terms of solid content) in the hydrophilic group-containing polyisocyanate is, for example, 1.0% by mass or more, preferably 2.5% by mass or more, more preferably 5.0% by mass or more, further more preferably 10% by mass or more, particularly preferably 15% by mass or more, and for example, 45% by mass or less, preferably 40% by mass or less, more preferably 35% by mass or less, further more preferably 25% by mass or less. The oxyethylene group content in the hydrophilic group-containing polyisocyanate can be calculated

in conformity with the method described in Examples to be described later.

When the oxyethylene group content in the hydrophilic group-containing polyisocyanate is the above-described lower limit or more, it is possible to further more reliably improve the pot life of the ink for textile printing to be described later. When the oxyethylene group content in the hydrophilic group-containing polyisocyanate is the above-described upper limit or less, it is possible to further more reliably improve the friction fastness of the ink cured product to be described later. In particular, when the oxyethylene group content in the hydrophilic group-containing polyisocyanate is 10% by mass or more, the blocked isocyanate can be self-emulsified in the ink for textile printing to be described later without separately adding an emulsifier.

(2) Blocking Agent

A blocking agent has an active group capable of reacting with an isocyanate group, and reacts with a free isocyanate group of the above-described polyisocyanate to form a latent isocyanate group. That is, the blocked isocyanate includes a latent isocyanate group which is blocked by a blocking agent.

The blocking agent includes a secondary amine compound including one secondary amino group capable of reacting with an isocyanate group. In the secondary amine compound, two carbon atoms are directly bonded to a nitrogen atom of the secondary amino group, and at least one of the two carbon atoms is a tertiary carbon atom.

Examples of the secondary amine compound include a piperidone-based compound shown by the following general formula (1), a piperidine-based compound shown by the following general formula (2), and a tert-butylamine-based compound shown by the following general formula (3).

General formula (1):

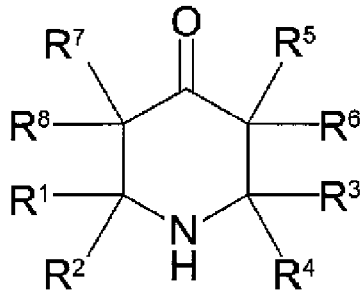

(1)

(In general formula (1), each of $R^1$ to $R^4$ represents an alkyl group having 1 to 4 carbon atoms. $R^1$ to $R^4$ may be the same or different from each other. Each of $R^5$ to $R^8$ represents an alkyl group having 1 to 4 carbon atoms or a hydrogen atom. $R^5$ to $R^8$ may be the same or different from each other).

The piperidone-based compound shown by the above-described general formula (1) has a piperidone skeleton (piperidine-4-one). In general formula (1), each of $R^1$ to $R^4$ represents an alkyl group. In other words, in the piperidone-based compound, both of the two carbon atoms directly bonded to a nitrogen atom of the secondary amino group are tertiary carbon atoms.

In general formula (1), examples of the alkyl group represented as $R^1$ to $R^4$ include straight-chain alkyl groups having 1 to 4 carbon atoms (methyl group, ethyl group, propyl group, butyl group) and branched alkyl groups having 1 to 4 carbon atoms (isopropyl group, isobutyl group, sec-butyl group, tert-butyl group), and preferably, a straight-chain alkyl group is used, further more preferably, a methyl group is used.

R1 to R4 in general formula (1) may be the same or different from each other, and are preferably the same.

In general formula (1), examples of the alkyl group represented as $R^5$ to $R^8$ include the above-described straight-chain alkyl groups having 1 to 4 carbon atoms, and the above-described branched alkyl groups having 1 to 4 carbon atoms. In general formula (1), $R^5$ to $R^8$ preferably represents a hydrogen atom.

$R^5$ to $R^8$ in general formula (1) may be the same or different from each other, and are preferably the same.

Specifically, an example of the piperidone-based compound includes a 2,2,6,6-tetramethylpiperidine-4-one (in general formula (1), all of $R^1$ to $R^4$ are methyl groups, and all of $R^5$ to $R^8$ are hydrogen atoms).

General formula (2):

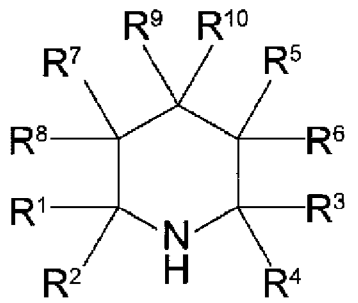

(2)

(In general formula (2), each of $R^1$ to $R^4$ is the same as each of $R^1$ to $R^4$ of the above-described general formula (1). Each of $R^5$ to $R^{10}$ is the same as each of $R^5$ to $R^8$ of the above-described general formula (1).)

The piperidine-based compound shown by the above-described general formula (2) has a piperidine skeleton. In general formula (2), each of $R^1$ to $R^4$ represents an alkyl group. In other words, in the piperidine-based compound, both of the two carbon atoms directly bonded to the nitrogen atom of the secondary amino group are tertiary carbon atoms. The piperidine-based compound is the same as the piperidone-based compound of the above-described general formula (1), except that $R^9$ and $R^{10}$ are bonded to a position 4 of the piperidine skeleton.

Specifically, an example of the piperidine-based compound includes a 2,2,6,6-tetramethylpiperidine (in general formula (2), all of $R^1$ to $R^4$ are methyl groups, and all of $R^5$ to $R^{10}$ are hydrogen atoms).

General formula (3):

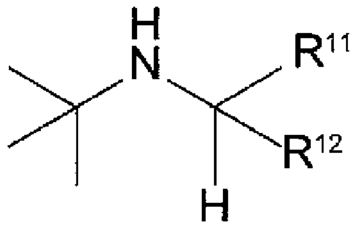

(3)

(In general formula (3), $R^{11}$ represents a hydrocarbon group having 1 to 20 carbon atoms. $R^{12}$ represents an alkyl group having 1 to 4 carbon atoms or a hydrogen atom.)

A tert-butylamine-based compound shown by the above-described general formula (3) has a tert-butyl group which is directly bonded to a nitrogen atom of a secondary amino group. In general formula (3), $R^{11}$ represents a hydrocarbon group, and $R^{12}$ represents an alkyl group or a hydrogen atom. In other words, in the tert-butylamine-based compound, of the two carbon atoms directly bonded to the nitrogen atom of the secondary amino group, one carbon atom is a tertiary carbon atom, and the other carbon atom is a secondary carbon atom or a tertiary carbon atom.

In general formula (3), examples of the hydrocarbon group represented as $R^{11}$ include an aliphatic group and an aromatic group. Examples of the aliphatic group represented as $R^{11}$ include an alkyl group having 1 to 4 carbon atoms (for example, the above-described straight-chain alkyl group having 1 to 4 carbon atoms, the above-described branched alkyl group having 1 to 4 carbon atoms, and the like) and a cycloalkyl group having 4 to 20 carbon atoms (for example, a cyclohexyl group and the like). An example of the aromatic group represented as $R^{11}$ includes an aryl group having 6 to 20 carbons atoms (for example, a phenyl group and the like).

In general formula (3), $R^{11}$ preferably represents an alkyl group having 1 to 4 carbon atoms or an aryl group having 6 to 20 carbon atoms, more preferably represents a methyl group or a phenyl group, and particularly preferably represents a methyl group.

In general formula (3), examples of the alkyl group represented as $R^{12}$ include the above-described straight-chain alkyl group having 1 to 4 carbon atoms and the above-described branched alkyl group having 1 to 4 carbon atoms.

In general formula (3), $R^{12}$ preferably represents a straight-chain alkyl group having 1 to 4 carbons atoms, and more preferably, represetns a methyl group.

Specifically, examples of the tert-butylamine-based compound include tert-butylisopropylamine (in general formula (3), $R^{11}$ and $R^{12}$ are methyl groups), N-tert-butylethylamine (in general formula (3), $R^{11}$ is a methyl group and $R^{12}$ is a hydrogen atom), and N-tert-butylbenzylamine (in general formula (3), $R^{11}$ is a phenyl group, and $R^{12}$ is a hydrogen atom).

These secondary amine compounds may be used alone or in combination of two or more.

In the secondary amine compound, preferably, of the two carbon atoms directly bonded to the nitrogen atom of the secondary amino group, one carbon atom is a tertiary carbon atom, and the other carbon atom is a tertiary carbon atom or a secondary carbon atom. More preferably, in the secondary amine compound, the other carbon atom is a tertiary carbon atom.

That is, the secondary amine compound preferably includes at least one selected from the group consisting of the piperidone-based compound shown by the above-described general formula (1), the piperidine-based compound shown by the above-described general formula (2), and the tert-butylamine-based compound in which $R^{12}$ is the alkyl group having 1 to 4 carbon atoms in the above-described general formula (3); more preferably includes the piperidone-based compound shown by the above-described general formula (1) and/or the piperidine-based compound shown by the above-described general formula (2); from the viewpoint of low-temperature curability, particularly preferably includes the piperidone-based compound shown by the above-described general formula (1); and more particularly preferably consists of the piperidone-based compound shown by the above-described general formula (1).

In the secondary amine compound, of the two carbon atoms directly bonded to the nitrogen atom of the secondary amino group, when one carbon atom is a tertiary carbon atom and the other carbon atom is a tertiary carbon atom or a secondary carbon atom, it is possible to further more reliably improve the friction fastness of the ink cured product to be described later. Further, in the secondary amine compound, when the other carbon atom is also a tertiary carbon atom, it is possible to impart further more excellent low-temperature curability to the ink for textile printing to be described later.

A dissociation temperature of the blocking agent is, for example, 120°C or less, preferably 100°C or less, more preferably 90°C or less, and for example, 60°C or more. The dissociation temperature of the blocking agent can be measured by the following method.

The blocked isocyanate is applied to a silicon wafer, and the temperature at which the isocyanate group regenerates is observed by IR measurement while heating. When the regenerated isocyanate group cannot be observed, the dissociation temperature of the blocking agent can be measured by mixing with a known polyol, applying the obtained mixture to a silicon wafer, and observing the temperature at which the hydroxyl group of the polyol reacts by IR measurement while heating.

In addition, the blocking agent may also contain another blocking agent (active group-containing compound) in addition to the above-described secondary amine compound, and preferably, consists of the above-described secondary amine compound.

When the blocking agent consists of the above-described secondary amine compound, it is possible to more stably ensure the improvement of the pot life of the ink for textile printing to be described later.

Examples of the other blocking agent include guanidine-based compounds, imidazole-based compounds, alcohol-based compounds, phenolic compounds, active methylene-based compounds, imine-based compounds, oxime-based compounds, carbamic acid-based compounds, urea-based compounds, acid amide-based (lactam-based) compounds, acid imide-based compounds, triazole-based compounds, pyrazole-based compounds, mercaptan-based compounds, bisulfite, imidazoline-based compounds, pyrimidine-based compounds, and amine compounds excluding the above-described secondary amine compounds. These other blocking agents may be used alone or in combination of two or more.

Of the other blocking agents, preferably, a guanidine-based compound is used. Examples of the guanidine-based compound include guanidine; 1-alkylguanidine such as 1-methylguanidine; 1-arylguanidine such as 1-phenylguanidine; 1,3-dialkylguanidine such as 1,3-dimethylguanidine; 1,3-diarylguanidine such as 1,3-diphenylguanidine and 1,3-di(o-tolyl)-guanidine; 1,1-dialkylguanidine such as 1,1-dimethylguanidine and 1,1-diethylguanidine; 1,2,3-trialkylguanidine such as 1,2,3-trimethylguanidine; 1,2,3-triarylguanidine such as 1,2,3-triphenylguanidine; 1,1,3,3-tetraalkylguanidine such as 1,1,3,3-tetramethylguanidine; and 1,5,7-triazabicyclo[4.4.0]deca-5-ene.

A content ratio of the other blocking agent in the blocking agent is, for example, 0% by mass or more, for example, 30% by mass or more, and preferably 20% by mass or less.

(3) Preparation of Blocked Isocyanate

Next, the preparation of the blocked isocyanate is described.

In order to prepare the blocked isocyanate, the above-described hydrophilic group-containing polyisocyanate is reacted with the above-described blocking agent.

An equivalent ratio (active hydrogen group/ isocyanate group) of the active hydrogen group (secondary amino group) in the blocking agent to the isocyanate group in the hydrophilic group-containing polyisocyanate is, for example, 0.2 or more, preferably 0.4 or more, more preferably 0.5 or more, further more preferably 0.8 or more, and for example, 2.0 or less, preferably 1.5 or less, further more preferably 1.2 or less.

When the equivalent ratio of the active hydrogen group (secondary amino group) to the isocyanate group is the above-described lower limit or more, it is possible to further more stably improve the pot life of the ink for textile printing to be described later. When the equivalent ratio of the active hydrogen group (secondary amino group) to the isocyanate group is the above-described upper limit or less, it is possible to further more stably improve the friction fastness of the ink cured product to be described later.

Further, the reaction of the hydrophilic group-containing polyisocyanate with the blocking agent is, for example, carried out in an atmosphere of an inert gas (for example, nitrogen gas, argon gas, and the like).

A reaction temperature is, for example, 0°C or more, preferably 20°C or more, and for example, 80°C or less, preferably 60°C or less. The reaction pressure is, for example, the atmospheric pressure. The reaction time is, for example, 0.5 hours or more, preferably 1.0 hour or more, and for example, 24 hours or less, preferably 12 hours or less.

Thus, a latent isocyanate group blocked by the blocking agent is produced.

In addition, when the blocking agent has the above-described secondary amine compound and another blocking agent in combination, the secondary amine compound and the other blocking agent may be simultaneously reacted with the hydrophilic group-containing polyisocyanate, or the secondary amine compound and the other blocking agent may be sequentially reacted with the hydrophilic group-containing polyisocyanate.

Further, the completion of the reaction can be judged by, for example, adopting an infrared spectroscopic analysis method and the like, and confirming the disappearance or decrease of the isocyanate group.

Also, the above-described reaction may be also carried out under a solvent-free state or in the presence of a solvent. Examples of the solvent include the above-described organic solvent and a known plasticizer. These solvents may be used alone or in combination of two or more.

Thus, the blocked isocyanate in which the isocyanate group of the hydrophilic group-containing polyisocyanate is blocked by the blocking agent is prepared.

(4) Cross-Linking Agent

In the above-described blocked isocyanate, when the oxyethylene group content of the hydrophilic group-containing polyisocyanate is 10% by mass or more, the blocked isocyanate is self-emulsifiable in water. In this case, the cross-linking agent does not need to contain an emulsifier in addition to the blocked isocyanate.

On the other hand, in the above-described blocked isocyanate, when the oxyethylene group content of the hydrophilic group-containing polyisocyanate is below 10% by mass, the blocked isocyanate is not self-emulsifiable in water. In this case, the cross-linking agent contains an emulsifier in addition to the blocked isocyanate.

Examples of the emulsifier include aromatic nonionic surfactants such as polyoxyethylene distyrenated phenyl ether (for example, EMULGEN A-500 (solid content concentration of 100% by mass, manufactured by Kao Corporation) and the like), polyoxyethylene cumylphenyl ether (for example, CP-2 (solid content concentration of 100% by mass, manufactured by TOHO Chemical Industry Co., Ltd.), NONAL 912A (solid content concentration of 100% by mass, manufactured by TOHO Chemical Industry Co., Ltd.), and the like), and polyoxyethylene styrylphenyl ether (for example, NOIGEN EA87 (solid content concentration of 100% by mass, manufactured by DKS Co., Ltd.); non-aromatic nonionic surfactants such as polyoxyethylene alkyl ether, polyoxyethylene cured castor oil, and sorbitan fatty acid ester; and anionic surfactants such as sodium laurate, sodium stearate, sodium lauryl sulfate, polyoxyethylene alkyl ether sulfate, and sodium dodecylbenzenesulfonate.

Of the emulsifiers, preferably, a polyoxyethylene distyrenated phenyl ether and a polyoxyethylene cumylphenyl ether are used, more preferably, EMULGEN A-500, CP-20, and NONAL 912A are used.

An addition ratio of the emulsifier is, for example, 3% by mass or more, preferably 10% by mass or more, and for example, 30% by mass or less, preferably 20% by mass or less with respect to the total sum of the blocked isocyanate and the emulsifier.

Also, the cross-linking agent may further contain a solvent which disperses or dissolves the blocked isocyanate. Examples of the solvent include water and the above-described organic solvent. Therefore, as described above, when the blocked isocyanate is prepared in the presence of an organic solvent, a reaction liquid containing the blocked isocyanate and the organic solvent can be also used as the cross-linking agent as it is.

A content ratio of the blocked isocyanate in the cross-linking agent is appropriately changed, and is, for example, 1% by mass or more, preferably 5% by mass or more, more preferably 20% by mass or more, particularly preferably 50% by mass or more, and for example, 90% by mass or less, preferably 80% by mass or less.

(5) Ink for Textile Printing

Such a cross-linking agent is preferably used, for example, as an ink raw material for textile printing.

The ink raw material for textile printing includes the above-described cross-linking agent as a polyisocyanate component and a main agent as a polyol component. Then, the ink raw material for textile printing is used by blending the cross-linking agent and the main agent which are separately prepared at the time of its use.

The main agent contains, for example, a macropolyol, and is preferably prepared by dispersing the macropolyol in water. In other words, the polyol component contains the macropolyol and water.

The macropolyol is a high molecular weight polyol having a number average molecular weight of 250 or more, preferably 400 or more, and for example, 10000 or less.

Examples of the macropolyol include polyester polyols, vegetable oil-based polyester polyols, polycaprolactone polyols, polyether polyosl, polycarbonate polyols, acrylic polyols, and urethane-modified polyols.

These macropolyols may be used alone or in combination of two or more. Of the macropolyols, preferably, an acrylic polyol and a urethane-modified polyol are used.

In addition, a pigment is preferably blended into any one of or both the cross-linking agent and the main agent. The pigment is not particularly limited, and examples thereof include a blue pigment, a white pigment, and a black pigment.

A mixing ratio of the pigment is, for example, 1% by mass or more, preferably 10% by mass or more, and for example, 40% by mass or less, preferably 30% by mass or less with respect to the total sum of the blocked isocyanate, the macropolyol, and the pigment.

Further, if necessary, an additive may be appropriately blended into any one of or both the cross-linking agent and the main agent. Examples of the additive include catalysts, epoxy resins, coatability improvers, leveling agents, defoaming agents, stabilizers such as antioxidant and ultraviolet absorber, thickeners, anti-sedimentation agents, plasticizers, surfactants, fillers, organic or inorganic fine particles, and antifungal agents. A mixing amount of the additive is appropriately determined in accordance with its purpose and use.

The polyisocyanate component (cross-linking agent) and the polyol component (main agent) are blended and stirred at the time of its use to prepare an ink for textile printing.

As a mixing ratio of the polyisocyanate component (cross-linking agent) to the polyol component (main agent), for example, an equivalent ratio (latent isocyanate group/ hydroxyl group) of the latent isocyanate group of the blocked isocyanate to the hydroxyl group of the macropolyol is, for example, 0.1 or more, preferably 0.5 or more, more preferably 0.8 or more, and for example, 5 or less, preferably 3 or less, further more preferably 1.2 or less.

Then, the ink for textile printing is imprinted (printed) on an object for textile printing with a known textile printing device (for example, ink jet device and the like), and then, if necessary, is subjected to heat treatment to be cured.

Examples of the object for textile printing include a fabric and leather.

The fiber of the fabric is not particularly limited, and examples thereof include natural fibers (for example, silk, cotton, hemp, and the like) and synthetic fibers (for example, nylon, polyester, rayon, and the like). A form of the fabric is not particularly limited, and examples thereof include a woven fabric, a knitted fabric, and a nonwoven fabric. The leather is not particularly limited, and examples thereof include natural leather and artificial leather.

A heating temperature is, for example, 120°C or less, preferably 100°C or less, more preferably 90°C or less, and for example, 60°C or more.

Thus, the blocking agent is dissociated from the blocked isocyanate, and the isocyanate group of the hydrophilic group-containing polyisocyanate and the hydroxyl group of the macropolyol are reacted, and the isocyanate group of the hydrophilic group-containing polyisocyanate and an active group included in the object for textile printing are reacted.

As described above, an ink cured product (cured coating film, polyurethane resin) is formed from the ink for textile printing containing the blocked isocyanate.

<Function and Effect>

The cross-linking agent contains the blocked isocyanate, and in the blocked isocyanate, the isocyanate group of the hydrophilic group-containing polyisocyanate is blocked by the blocked isocyanate. Then, the blocking agent includes the above-described secondary amine compound.

Therefore, it is possible to impart excellent low-temperature curability to the ink for textile printing, to improve the pot life of the ink for textile printing, and to impart excellent friction fastness to the ink cured product. As a result, it is possible to ensure the low-temperature curability and the pot life of the ink for textile printing and the friction fastness of the ink cured product at a good balance.

Examples

Next, the present invention is further described based on Examples below. The present invention is however

not limited by the following Examples. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF EMBODIMENTS". All designations of "part" or "parts" and "%" mean part or parts by mass and % by mass, respectively, unless otherwise particularly specified.

The details and abbreviations of each polyisocyanate, polyoxyethylene group-containing active hydrogen compound, and blocking agent used in Examples and Comparative Examples are described below. In addition, each calculation method used in Examples and Comparative Examples is described below.

<Polyisocyanate>

TAKENATE D-170N: isocyanurate derivative mainly composed of trimer of hexamethylene diisocyanate (HDI), isocyanate group content of 20.7% by mass, solid content of 100% by mass, manufactured by Mitsui Chemicals, Inc.

TAKENATE D-160N: trimethylolpropane (TMP) adduct of hexamethylene diisocyanate (HDI), isocyanate group content of 12.6% by mass, solid content of 75% by mass, solvent, ethyl acetate, manufactured by Mitsui Chemicals, Inc.

STABiO D-370N: isocyanurate derivative mainly composed of trimer of pentamethylene diisocyanate (PDI), isocyanate group content of 25% by mass, solid content of 100% by mass, manufactured by Mitsui Chemicals, Inc.

TAKENATE D-127N: isocyanurate derivative mainly composed of trimer of bis(isocyanatomethyl)cyclohexane ($H_6XDI$), isocyanate group content of 13.5% by mass, solid content of 75% by mass, solvent, ethyl acetate, manufactured by Mitsui Chemicals, Inc.

TAKENATE D-140N: isocyanurate derivative mainly composed of trimer of isophorone diisocyanate (IPDI), isocyanate group content of 10.5% by mass, solid content of 75% by mass, solvent, ethyl acetate, manufactured by Mitsui Chemicals, Inc.

TAKENATE D-110N: trimethylolpropane (TMP) adduct of xylylene diisocyanate (XDI), isocyanate group content of 11.5% by mass, solid content of 75% by mass, solvent, ethyl acetate, manufactured by Mitsui Chemicals, Inc.

<Polyoxyethylene-Group Containing Active Hydrogen Compound>

MePEG1000: poly(oxyethylene) methyl ether, number average molecular weight of 1000, manufactured by TOHO Chemical Industry Co., Ltd.

MePEG550: poly(oxyethylene) methyl ether, number average molecular weight of 550, manufactured by TOHO Chemical Industry Co., Ltd.

<Blocking Agent>

TMPDO: 2,2,6,6-tetramethylpiperidine-4-one, manufactured by Tokyo Chemical Industry Co., Ltd.
TMPDI: 2,2,6,6-tetramethylpiperidine, manufactured by FUJIFILM Wako Pure Chemical Corporation
tBiPA: tert-butylisopropylamine, manufactured by Alfa Aesar, A Johnson Matthey Company
tBEtA: N-tert-butylethylamine, manufactured by Tokyo Chemical Industry Co., Ltd.
tBBzA: N-tert-butylbenzylamine, manufactured by Tokyo Chemical Industry Co., Ltd.
TMG: 1,1,3,3-tetramethylguanidine, manufactured by Tokyo Chemical Industry Co., Ltd.
DMP: 3,5-dimethylpyrazol, manufactured by Tokyo Chemical Industry Co., Ltd.
IMZ: imidazole, manufactured by The Nippon Synthetic Chemical Industry Co., Ltd.
MEKO: methyl ethyl ketoxime, manufactured by Tokyo Chemical Industry Co., Ltd.
DCHA: dicyclohexylamine, manufactured by Tokyo Chemical Industry Co., Ltd.

<Content Ratio of Oxyethylene Group in Hydrophilic Group-Containing Polyisocyanate>

Content ratio of oxyethylene group (% by mass)= charged amount of polyoxyethylene-group containing active hydrogen compound (parts by mass)/ [charged amount of polyisocyanate (parts by mass)+ charged amount of polyoxyethylene group-containing active hydrogen compound (parts by mass)]× 100

<Preparation of Hydrophilic Group-Containing Polyisocyanate>

«Preparation Examples 1 to 6»

A reaction vessel having a volume of 2 L and equipped with a stirrer, a thermometer, a condenser, and a nitrogen gas introduction pipe was charged with TAKENATE D-170N (isocyanurate derivative of hexamethylene diisocyanate (HDI), a solid content of 100% by mass) and the polyoxyethylene group-containing active hydrogen compound shown in Table 1 so as to have a formulation shown in Table 1 at room temperature (25°C), and also charged with 27.8 parts by mass of diethylene glycol ethyl methyl ether (MEDG, manufactured by Tokyo Chemical Industry Co., Ltd.) as a solvent. Thereafter, the polyisocyanate and the polyoxyethylene group-containing active hydrogen compound were subjected to urethanization reaction at 90°C until there was no change in an amount of remaining isocyanate, thereby preparing an MEDG solution of a hydrophilic group-containing polyisocyanate.

Further, the isocyanate group content remaining in the MEDG solution of the hydrophilic group-containing polyisocyanate was determined by back titration using a dibutylamine. The results are shown in Table 1.

«Preparation Example 7»

A reaction vessel having a volume of 2 L and equipped with a stirrer, a thermometer, a condenser, and a nitrogen gas introduction pipe was charged with 267 parts by mass of TAKENATE D-160N (trimethylolpropane (TMP) adduct of hexamethylene diisocyanate (HDI), a solid content of 75% by mass), and an ethyl acetate was distilled off under reduced pressure conditions at 150°C. In Table 2, a value converted into the solid content is shown as parts by mass of the polyisocyanate.

Then, MePEG1000 (poly(oxyethylene) methyl ether) was added to the obtained concentrate so as to have the formulation shown in Table 2, and 27.8 parts by mass of MEDG was added as a solvent. Thereafter, a polyisocyanate and a poly(oxyethylene) methyl ether were subjected to urethanization reaction at 90°C until there was no change in an amount of remaining isocyanate, thereby preparing a MEDG solution of the hydrophilic group-containing polyisocyanate.

Further, the isocyanate group content remaining in the MEDG solution of the hydrophilic group-containing polyisocyanate was determined by back titration using a dibutylamine. The results are shown in Table 2.

«Preparation Examples 8 to 11»

An MEDG solution of a hydrophilic group-containing polyisocyanate was prepared in the same manner as in Preparation Example 7, except that TAKENATE D-160N was changed to the polyisocyanate shown in Table 2.

[Table 1]

Table 1

| Formulation | Name of Compound | | | Trade Name | Unit | Preparation Ex.1 | Preparation Ex. 2 | Preparation Ex. 3 | Preparation Ex. 4 | Preparation Ex. 5 | Preparation Ex. 6 |
|---|---|---|---|---|---|---|---|---|---|---|---|
| Formulation | Hydrophilic Group-Containing Polyisocyanate | Polyisocyanate | Isocyanurate Derivative of HDI | TAKENATE D170N | [parts by mass] | 200 | 200 | 200 | 200 | 200 | 200 |
| | | | TMP Adduct of HDI | TAKENATE D160N | | - | - | - | - | - | - |
| | | | Isocyanurate Derivative of PDI | STABiO D370N | | - | - | - | - | - | - |
| | | | Isocyanurate Derivative of $H_6XDI$ | TAKENATE D127N | | - | - | - | - | - | - |
| | | | Isocyanurate Derivative of IPDI | TAKENATE D140N | | - | - | - | - | - | - |
| | | | TMP Adduct of XDI | TAKENATE D110N | | - | - | - | - | - | - |
| | | Polyoxyethylene Group-Containing Active Hydrogen Compound | | MePEG1000 | | 5.1 | 22.2 | 50 | 107.7 | 133.3 | - |
| | | | | MePEG550 | | - | - | - | - | - | 50 |
| | | Oxyethylene Group Content | | | [% by mass] | 2.5 | 10 | 20 | 35 | 40 | 20 |
| | | Isocyanate Group Content | | | [% by mass] | 17.7 | 16.1 | 14.2 | 11.0 | 9.9 | 13.5 |

[Table 2]

Table 2

| | Name of Compound | | | Trade Name | Unit | Preparation Ex. 7 | Preparation Ex. 8 | Preparation Ex. 9 | Preparation Ex. 10 | Preparation Ex. 11 |
|---|---|---|---|---|---|---|---|---|---|---|
| Formulation | Hydrophilic Group-Containing Polyisocyanate | Polyisocyanate | Isocyanurate Derivative of HDI | TAKENATE D170N | [parts by mass] | - | - | - | - | - |
| | | | TMP Adduct of HDI | TAKENATE D160N | | 200 | - | - | - | - |
| | | | Isocyanurate Derivative of PDI | STABiO D370N | | - | 200 | - | - | - |
| | | | Isocyanurate Derivative of $H_6XDI$ | TAKENATE D127N | | - | - | 200 | - | - |
| | | | Isocyanurate Derivative of IPDI | TAKENATE D140N | | - | - | - | 200 | - |
| | | | TMP Adduct of XDI | TAKENATE D110N | | - | - | - | - | 200 |
| | | Polyoxyethylene Group-Containing Active Hydrogen Compound | | MePEG1000 | | 50 | 50 | 50 | 50 | 50 |
| | | | | MePEG550 | | - | - | - | - | - |
| | | Oxyethylene Group Content | | | [% by mass] | 20 | 20 | 20 | 20 | 20 |
| | | Isocyanate Group Content | | | [% by mass] | 11.3 | 17.2 | 12.8 | 9.8 | 10.8 |

<Preparation of Blocked Isocyanate>

«Examples 1 to 8»

After 145 parts by mass of MEDG was added to 277.8 parts by mass of the MEDG solution of each hydrophilic group-containing polyisocyanate of Preparation Examples shown in Table 3 to be stirred, a 2,2,6,6-tetramethylpiperidine-4-one (TMPDO) was added so that an equivalent ratio (blocking agent/ NCO) of the blocking agent to the isocyanate group of the hydrophilic group-containing polyisocyanate was the value shown in Table 3. The TMPDO was charged in a plurality of times so that a temperature of a reaction solution did not exceed 40°C. Thereafter, the isocyanate group and the blocking agent were reacted at 60°C for five hours.

Thus, the MEDG solution of the blocked isocyanate was prepared. The solid content concentration of the MEDG solution of the blocked isocyanate was 70% by mass. Then, the MEDG solution of the blocked isocyanate was referred to as a cross-linking agent.

«Examples 9 to 12»

A cross-linking agent (MEDG solution of the blocked isocyanate) was prepared in the same manner as in Example 3, except that the TMPDO was changed to the blocking agent shown in Table 4.

«Examples 13 and 14»

A cross-linking agent (MEDG solution of the blocked isocyanate) was prepared in the same manner as in Example 3, except that the TMPDO was changed to the blocking agent shown in Table 4 and the reaction conditions were changed to three hours at 40°C.

«Preparation Example 15»

A cross-linking agent (MEDG solution of the blocked isocyanate) was prepared in the same manner as in Example 10, except that the MEDG solution of the hydrophilic group-containing polyisocyanate of Preparation Example 3 was changed to the MEDG solution of the hydrophilic group-containing polyisocyanate of Preparation Example 5.

«Preparation Examples 16 to 21»

A cross-linking agent (MEDG solution of the blocked isocyanate) was prepared in the same manner as in Example 3, except that the MEDG solution of the hydrophilic group-containing polyisocyanate of Preparation Example 3 was changed to the MEDG solution of each hydrophilic group-containing polyisocyanate of Preparation Examples shown in Table 5. The solid content concentration of the MEDG solution of the blocked isocyanate is shown in Table 5.

«Preparation Example 22»

An MEDG solution of the blocked isocyanate was prepared in the same manner as in Example 3, except that the MEDG solution of the hydrophilic group-containing polyisocyanate of Preparation Example 3 was changed to the MEDG solution of the hydrophilic group-containing polyisocyanate of Preparation Example 1.

Then, in the MEDG solution of the blocked isocyanate, an emulsifier (EMULGEN A-500, manufactured by Kao Corporation) was added so that a mixing ratio of the emulsifier was 15% by mass with respect to the total sum of the solid content of the MEDG solution of the blocked isocyanate and the emulsifier. Thus, the cross-linking agent was prepared.

«Examples 23 and 24»

A cross-linking agent was prepared in the same manner as in Example 22, except that the TMPDO was changed to the blocking agent shown in Table 6.

<<Comparative Example 1>>

A cross-linking agent was prepared by further adding the MEDG to the MEDG solution of the hydrophilic group-containing polyisocyanate without adding a blocking agent to adjust the solid content concentration to 70% by mass.

«Comparative Examples 2 to 5»

A cross-linking agent (MEDG solution of the blocked isocyanates) was prepared in the same manner as in Example 3, except that the TMPDO was changed to the blocking agent shown in Table 7.

«Comparative Example 6»

A cross-linking agent (MEDG solution of the blocked isocyanate) was prepared in the same manner as in Example 3, except that the TMPDO was changed to the blocking agent shown in Table 7 and the reaction conditions were changed to three hours at 40°C.

<Evaluation>

1. Gel Fraction

A water dispersion liquid (polyol component, main agent) obtained by dispersing an acrylic polyol (trade name: RE4788, manufactured by Mitsui Chemicals, Inc) in water was prepared. Then, each cross-linking agent of Examples and Comparative Examples was added to the acrylic polyol dispersion liquid (polyol component) so that the hydroxyl group of the acrylic polyol and the latent isocyanate group of the cross-linking agent became equal in amount, and the obtained mixture was stirred for 30 minutes to prepare a process liquid (ink for textile printing). The solid content concentration of the final process liquid was 30% by mass.

The process liquid prepared as described above was applied to a polypropylene plate with an applicator having a thickness of 100 μm and dried at 23°C for three hours to be then cured at 70°C for 30 minutes. Thereafter, the cured coating film was aged for seven days at 23°C with a relative humidity of 55%. After aging, the resulting coating film was immersed into a mixed solvent of acetone and methanol at 23°C for 24 hours, and the mass of the component remaining without dissolution after immersion with respect to the mass of the coating film before immersion was calculated as a gel fraction.

Then, the gel fraction of the coating film was evaluated in accordance with the following criteria. The results are shown in Tables 3 to 7.

Excellent: The gel fraction of 80% or more,
Good: The gel fraction of 60% or more and less than 80%, and
Bad: The gel fraction of less than 60%.

2. Pot Life

A pigment (trade name: EMF Blue 2R, manufactured by TOYO INK Co., Ltd., solid content concentration of 30% by mass), a polyurethane resin aqueous dispersion liquid (polyol component, trade name: TAKELAC W-6110, manufactured by Mitsui Chemicals Inc., solid content concentration of 32% by mass), and each cross-linking agent of Examples and Comparative Examples were blended so that a mass ratio of the solid content was a pigment/ polyurethane resin/ cross-linking agent= 20/ 75/ 5, and then, diluted with water so that the mass concentration of the total solid content was 20% by mass to prepare a process liquid (ink for textile printing).

Then, the properties of the process liquid immediately after preparation (0 Hr) and the properties of the process liquid after being left to stand at 23°C for 8 hours after preparation (8 Hr) were visually confirmed.

Then, the pot life of the process liquid was evaluated in accordance with the following criteria. The results are shown in Tables 3 to 7.

Excellent: There is no gelation or sediment in the process liquid, and the viscosity of the process liquid is not thickened.
Good: There is a little sediment in the process liquid.
Bad: A large amount of sediment is generated in the process liquid, or the entire process liquid is gelated.

3. Friction Fastness

A process liquid (ink for textile printing) was prepared in the same manner as in "2. Pot Life" described above. Then, immediately after preparation of the process liquid (0 Hr), as a test fabric, the cotton cannequin No. 3 was immersed into the process liquid. Thereafter, the test fabric immersed into the process liquid was dried overnight at room temperature of 23°C with a relative humidity of 55%, and then, subjected to heat treatment at 80°C for 5 minutes, or the test fabric immersed into the process liquid was left to stand at room temperature of 23°C for one week with a relative humidity of

55%. Thus, a processed fabric (sample for evaluation) was prepared.

Further, a processed fabric (sample for evaluation) was prepared in the same manner as the description above, except that the test fabric was immersed into the process liquid eight hours after the preparation of the process liquid (8 Hr).

Then, the surface of the sample for evaluation was rubbed in the wet conditions in accordance with JIS. L. 0849-96 II type using a Gakushin-type friction tester.

Then, the friction fastness of the sample for evaluation was evaluated using a contamination gray scale in accordance with the following criteria. The results are shown in Tables 3 to 7.

Excellent: Grade 3 or more,
Good: Grade 1 to 2 or more, and less than grade 2 to 3, and
Bad: Grade 1.

[Table 3]

Table 3

| No. | | | | Ex. 1 | Ex. 2 | Ex. 3 | Ex. 4 | Ex. 5 | Ex. 6 | Ex. 7 | Ex. 8 |
|---|---|---|---|---|---|---|---|---|---|---|---|
| Cross-Linking Agent | Hydrophilic Group-Containing Polyisocyanate | | Preparation Ex. No. | Preparation Ex. 3 | | | | | Preparation Ex. 2 | Preparation Ex. 4 | Preparation Ex. 5 |
| | | | Polyisocyanate | Isocyanurate Derivative of HDI | | | | | Isocyanurate Derivative of HDI | | |
| | | | EO Ratio (% by mass) | 20 | | | | | 10 | 35 | 40 |
| | Blocking Agent | | | TMPDO | | | | | TMPDO | | |
| | Blocking Agent/ NCO Mole Ratio | | | 0.40 0.50 1.05 1.50 1.60 | | | | | 1.05 | | |
| | Solid Content Concentration [% by mass] | | | 70 | | | | | 70 | | |
| Evaluation | Gel Fraction | 70°C×30min | (%) | Good (75) | Excellent (80) | Excellent (84) | Excellent (87) | Excellent (82) | Excellent (83) | Excellent (82) | Good (72) |
| | Pot Life of Process Liquid | | (OHr) | Excellent | Excellent | Excellent | Excellent | Good | Excellent | Excellent | Excellent |
| | | | (8Hr) | Good | Good | Excellent | Excellent | Good | Good | Excellent | Excellent |
| | Friction Fastness | Cured at 80°C×5min×RH 55% | (OHr) | Excellent | Excellent | Excellent | Excellent | Good | Excellent | Excellent | Good |
| | | | (8Hr) | Good | Good | Excellent | Good | Good | Excellent | Good | Good |
| | | Cured at 23tx 1 weekxRH 55% | (OHr) | Excellent | Excellent | Excellent | Excellent | Good | Excellent | Excellent | Good |
| | | | (8Hr) | Good | Good | Excellent | Good | Good | Excellent | Good | Good |

[Table 4]

Table 4

| No. | | | | Ex. 9 | Ex. 10 | Ex. 11 | Ex. 12 | Ex. 13 | Ex. 14 | Ex. 15 |
|---|---|---|---|---|---|---|---|---|---|---|
| Cross-Linking Agent | Hydrophilic Group-Containing Polyisocyanate | | Preparation Ex. No. | Preparation Ex.3 | | | | Preparation Ex. 3 | | Preparation Ex. 5 |
| | | | Polyisocyanate | Isocyanurate Derivative of HDI | | | | Isocyanurate Derivative of HDI | | Isocyanurate Derivative of HDI |
| | | | EO Ratio (% by mass) | 20 | | | | 20 | | 40 |
| | Blocking Agent | | | TMPDI | tBiPA | tBEtA | tBBzA | TMG+TMPDO | TMG+tBiPA | tBiPA |
| | Blocking Agent/ NCO Mole Ratio | | | 1.05 | | | | TMG(0.15) TMPDO(0.90) | TMG(0.15) tBiPA(0.90) | 1.05 |
| | Solid Content Concentration [% by mass] | | | 70 | | | | 70 | | 70 |
| Evaluation | Gel Fraction | 70°C×30min | (%) | Excellent (80) | Good (75) | Good (65) | Good (62) | Excellent (95) | Excellent (92) | Good (75) |
| | Pot Life of Process Liquid | | (OHr) | Excellent | Excellent | Excellent | Excellent | Excellent | Excellent | Excellent |
| | | | (8Hr) | Excellent | Excellent | Excellent | Excellent | Good | Good | Excellent |
| | Friction Fastness | Cured at 80°C× 5min×RH 55% | (OHr) | Excellent | Excellent | Excellent | Excellent | Excellent | Excellent | Good |
| | | | (8Hr) | Excellent | Excellent | Good | Good | Good | Good | Good |
| | | Cured at 23°C× 1 weekxRH 55% | (OHr) | Excellent | Excellent | Excellent | Excellent | Excellent | Excellent | Good |
| | | | (8Hr) | Excellent | Excellent | Excellent | Excellent | Good | Good | Good |

[Table 5]

Table 5

| No. | | | | Ex. 16 | Ex. 17 | Ex. 18 | Ex. 19 | Ex. 20 | Ex. 21 |
|---|---|---|---|---|---|---|---|---|---|
| Cross-Linking Agent | Hydrophilic Group-Containing Polyisocyanate | | Preparation Ex. No. | Preparation Ex. 6 | Preparation Ex. 7 | Preparation Ex. 8 | Preparation Ex. 9 | Preparation Ex. 10 | Preparation Ex. 11 |
| | | | Polyisocyanate | Isocyanurate Derivative of HDI | TMP Adduct of HDI | Isocyanurate Derivative of PDI | Isocyanurate Derivative of $H_6XDI$ | Isocyanurate Derivative of IPDI | TMP Adduct of XDI |
| | | | EO Ratio (% by mass) | 20 | | | | | |
| | Blocking Agent | | | TMPDO | | | | | |
| | Blocking Agent/ NCO Mole Ratio | | | 1.05 | | | | | |
| | Solid Content Concentration [% by mass] | | | 70 | | 60 | | | |
| Evaluation | Gel Fraction | 70°C×30min | (%) | Excellent (82) | Excellent (81) | Excellent (82) | Good (75) | Excellent (82) | Excellent (84) |
| | Pot Life of Process Liquid | | (OHr) | Excellent | Excellent | Excellent | Excellent | Excellent | Excellent |
| | | | (8Hr) | Excellent | Good | Excellent | Good | Good | Good |
| | Friction Fastness | Cured at 80°C× 5min×RH 55% | (OHr) | Excellent | Excellent | Excellent | Excellent | Excellent | Good |
| | | | (8Hr) | Excellent | Excellent | Excellent | Excellent | Excellent | Good |
| | | Cured at 23°C× 1 week×RH 55% | (OHr) | Excellent | Excellent | Excellent | Excellent | Excellent | Good |
| | | | (8Hr) | Excellent | Excellent | Excellent | Excellent | Excellent | Good |

[Table 6]

Table 6

| No. | | | | Ex. 22 | Ex. 23 | Ex. 24 |
|---|---|---|---|---|---|---|
| Cross-Linking Agent | Hydrophilic Group-Containing Polyisocyanate | | Preparation Ex. No. | Preparation Ex. 1 | | |
| | | | Polyisocyanate | Isocyanurate Derivative of HDI | | |
| | | | EO Ratio (% by mass) | 2.5 | | |
| | Blocking Agent | | | TMPDO | TMPDI | tBiPA |
| | Blocking Agent/ NCO Mole Ratio | | | 1.05 | | |
| | Solid Content Concentration [% by mass] | | | 70 | | |
| | Emulsifier (% by mass/ solid content) | | | 15 | | |
| Evaluation | Gel Fraction | 70°C×30min | (%) | Good (75) | Good (73) | Good (65) |
| | Pot Life of Process Liquid | | (OHr) | Excellent | Excellent | Excellent |
| | | | (8Hr) | Excellent | Good | Good |
| | Friction Fastness | Cured at 80°C× 5min×RH 55% | (OHr) | Excellent | Excellent | Excellent |
| | | | (8Hr) | Good | Good | Good |
| | | Cured at 23°C× 1 week×RH 55% | (OHr) | Excellent | Excellent | Excellent |
| | | | (8Hr) | Good | Good | Good |

**[Table** 7]

Table 7

| No. | | | | Comparative Ex. 1 | Comparative Ex. 2 | Comparative Ex. 3 | Comparative Ex. 4 | Comparative Ex. 5 | Comparative Ex. 6 |
|---|---|---|---|---|---|---|---|---|---|
| Cross-Linking Agent | Hydrophilic Group-Containing Polyisocyanate | | Preparation Ex. No. | Preparation Ex. 3 | | | | | |
| | | | Polyisocyanate | Isocyanurate Derivative of HDI | | | | | |
| | | | EO Ratio (% by mass) | 20 | | | | | |
| | Blocking Agent | | | - | DMP | MEKO | DCHA | IMZ | TMG+IMZ |
| | Blocking Agent/ NCO Mole Ratio | | | - | 1.05 | 1.05 | 1.05 | 1.05 | TMG(0.20) IMZ(0.85) |
| | Solid Content Concentration [% by mass] | | | 70 | | | | | |
| | Gel Fraction | 70°C×30min | (%) | Excellent (82) | Bad (<5) | Bad (<5) | Bad (<5) | Bad (35) | Bad (48) |
| Evaluation | Pot Life of Process Liquid | | (OHr) | Excellent | Excellent | Excellent | Excellent | Excellent | Good |
| | | | (8Hr) | Bad | Excellent | Excellent | Excellent | Excellent | Good |
| | Friction Fastness | Cured at 80°C× 5min×RH 55% | (OHr) | Excellent | Bad | Bad | Bad | Bad | Good |
| | | | (8Hr) | Bad | Bad | Bad | Bad | Bad | Good |
| | | Cured at 23°C× 1 weekxRH 55% | (OHr) | Excellent | Bad | Bad | Bad | Bad | Good |
| | | | (8Hr) | Bad | Bad | Bad | Bad | Bad | Good |

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

INDUSTRIAL APPLICATION

The cross-linking agent for a fiber or leather of the present invention is preferably used as, for example, an ink raw material for textile printing printed on an object for textile printing such as a fabric and leather.

## Claims

**1.** A cross-linking agent for a fiber or leather comprising:

a blocked isocyanate in which an insocyanate group of a hydrophilic group-containing polyisocyanate being reaction product of a polyisocyante and a hydrophilic group-containing active hydrogen compound is blocked by a blocking agent, wherein
the blocking agent contains a secondary amine compound; in the secondary amine compound, two carbon atoms are directly bonded to a nitrogen atom of a secondary amino group; and at least one of the two hydrocarbon atoms is a tertiary carbon atom.

**2.** The cross-linking agent for a fiber or leather according to claim 1, wherein
an equivalent ratio of a secondary amino group of the blocking agent to an isocyanate group of the hydrophilic group-containing polyisocyanate is 0.5 or more and 1.5 or less.

**3.** The cross-linking agent for a fiber or leather according to claim 1, wherein
the hydrophilic group-containing active hydrogen compound contains a polyoxyethylene group-containing active hydrogen compound.

**4.** The cross-linking agent for a fiber or leather according to claim 3, wherein
the oxyethylene group content in the hydrophilic group-containing polyisocyanate is 2.5% by mass or more and 35% by mass or less.

**5.** The cross-linking agent for a fiber or leather according to claim 1, wherein
as the blocking agent, in the secondary amine compound, of two carbon atoms bonded to a nitrogen atom of a secondary amino group, one carbon atom is a tertiary carbon atom and the other carbon atom is a tertiary carbon atom or a secondary carbon atom.

**6.** The cross-linking agent for a fiber or leather according to claim 5, wherein
the other carbon atom is a tertiary carbon atom.

## INTERNATIONAL SEARCH REPORT

International application No.
PCT/JP2020/013517

A. CLASSIFICATION OF SUBJECT MATTER
Int. Cl. C08G18/50(2006.01)i, C08G18/10(2006.01)i, C08G18/48(2006.01)i, D06N3/14(2006.01)i
FI: C08G18/80 080, C08G18/10, C08G18/48 033, D06N3/14 102
According to International Patent Classification (IPC) or to both national classification and IPC

B. FIELDS SEARCHED
Minimum documentation searched (classification system followed by classification symbols)
Int. Cl. C08G18/00-18/87, C08G71/00-71/04, D06N1/00-7/06

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| Y | JP 2014-172942 A (MITSUI CHEMICALS, INC.) 22 September 2014, claims, paragraphs [0041], [0083], [0106], examples | 1-6 |
| Y | JP 2005-105111 A (DAINIPPON INK AND CHEMICALS, INC.) 21 April 2005, claims, paragraphs [0096], [0103] | 1-6 |
| Y | JP 2-091274 A (DAINIPPON INK AND CHEMICALS, INC.) 30 March 1990, claims | 1-6 |
| Y | JP 2017-082208 A (MITSUI CHEMICALS, INC.) 18 May 2017, claims, paragraphs [0255], [0257] | 1-6 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26.05.2020 | 09.06.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No.
PCT/JP2020/013517

C (Continuation). DOCUMENTS CONSIDERED TO BE RELEVANT

| Category* | Citation of document, with indication, where appropriate, of the relevant passages | Relevant to claim No. |
|---|---|---|
| A | JP 2012-077255 A (MITSUI CHEMICALS, INC.) 19 April 2012, entire text | 1-6 |
| A | JP 2017-504730 A (RUDOLF GMBH) 09 February 2017, entire text | 1-6 |
| A | JP 2006-117940 A (BAYER MATERIALSCIENCE LLC) 11 May 2006, entire text | 1-6 |

Form PCT/ISA/210 (continuation of second sheet) (January 2015)

**INTERNATIONAL SEARCH REPORT**
Information on patent family members

International application No.
PCT/JP2020/013517

| Patent Documents referred to in the Report | Publication Date | Patent Family | Publication Date |
|---|---|---|---|
| JP 2014-172942 A | 22.09.2014 | (Family: none) | |
| JP 2005-105111 A | 21.04.2005 | (Family: none) | |
| JP 2-091274 A | 30.03.1990 | (Family: none) | |
| JP 2017-082208 A | 18.05.2017 | US 2016/0200858 A1<br>claims, paragraphs [0252], [0254]<br>WO 2015/025776 A1<br>EP 3037450 A | |
| JP 2012-077255 A | 19.04.2012 | (Family: none) | |
| JP 2017-504730 A | 09.02.2017 | US 2017/0022657 A1<br>entire text<br>WO 2015/078811 A1<br>EP 3074437 A | |
| JP 2006-117940 A | 11.05.2006 | US 2006/0089479 A1<br>entire text<br>EP 1650245 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012072381 A